(19) **Europäisches Patentamt**
**European Patent Office**
**Office européen des brevets**

(11) **EP 4 564 730 A1**

(12) **EUROPEAN PATENT APPLICATION**
published in accordance with Art. 153(4) EPC

(43) Date of publication:
**04.06.2025 Bulletin 2025/23**

(51) International Patent Classification (IPC):
**H04L 5/14** (2006.01)    **H04B 15/00** (2006.01)
**H01Q 1/52** (2006.01)

(21) Application number: **22955346.6**

(52) Cooperative Patent Classification (CPC):
**H01Q 1/52; H04B 15/00; H04L 5/14**

(22) Date of filing: **18.08.2022**

(86) International application number:
**PCT/CN2022/113340**

(87) International publication number:
**WO 2024/036566 (22.02.2024 Gazette 2024/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Jiang
Shenzhen, Guangdong 518129 (CN)**
• **WANG, Qiang
Shenzhen, Guangdong 518129 (CN)**

• **DENG, Changshun
Shenzhen, Guangdong 518129 (CN)**
• **FAN, Junfang
Shenzhen, Guangdong 518129 (CN)**
• **BAI, Xue
Shenzhen, Guangdong 518129 (CN)**
• **YI, Huan
Shenzhen, Guangdong 518129 (CN)**
• **CUI, He
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **ANTENNA SYSTEM**

(57)    Embodiments of this application disclose an antenna system, to improve isolation between two antenna arrays. The antenna system includes a first antenna array and a second antenna array. A spacing between two adjacent rows of antenna elements of the first antenna array in a target direction is determined based on a wavelength and a feeding phase difference between the two adjacent rows of antenna elements of the first antenna array in the target direction. A spacing between two adjacent rows of antenna elements of the second antenna array in the target direction is determined based on the wavelength and a feeding phase difference between the two adjacent rows of antenna elements of the second antenna array in the target direction.

FIG. 5

## Description

## TECHNICAL FIELD

Embodiments of this application relate to the communication field, and in particular, to an antenna system.

## BACKGROUND

With large-scale commercial use of multi-input multi-output (multi-input multi-output, MIMO) technologies, an integrated access and backhaul (integrated access and backhaul, IAB) node solution is provided. This solution is used to implement coverage extension and blind spot filling of a macro base station, and can maximize capacity potential and a spectrum value of MIMO. An IAB node includes a mobile termination (mobile termination, MT) antenna and a distributed unit (distributed unit, DU) antenna. The MT antenna is configured to communicate with a macro base station, and the DU antenna is configured to communicate with a user equipment (user equipment, UE). Because isolation between an MT antenna and a DU antenna of a conventional IAB node is low, the conventional IAB node operates in a frequency division duplex mode or a time division duplex mode, causing a waste of spectrum resources or slot resources. For the IAB node, in a same frequency band, if it is required that the MT antenna can also receive a signal from the macro base station when the DU antenna sends a signal to the UE, and the DU antenna can also receive a signal from the UE when the MT antenna sends a signal to the macro base station, interference between the two antennas needs to be reduced.

In a conventional technology, two metal fences are disposed to separately enclose the MT antenna and the DU antenna, and a metal strip array is disposed between the two metal fences, to reduce the interference between the antennas. However, the metal fence usually has a high height, and the metal strip array also occupies a large amount of space, affecting a design of another part of the IAB node.

## SUMMARY

This application provides an antenna system, to improve isolation between an MT antenna and a DU antenna.

A first aspect of this application provides an antenna system.

The antenna system includes a first antenna array and a second antenna array, where the first antenna array is disposed on a first side, and the second antenna array is disposed on a second side. A spacing between two adjacent rows of antenna elements of the first antenna array in a target direction is determined based on a wavelength and a feeding phase difference between the two adjacent rows of antenna elements of the first antenna array in the target direction, a spacing between two adjacent rows of antenna elements of the second antenna array in the target direction is determined based on the wavelength and a feeding phase difference between the two adjacent rows of antenna elements of the second antenna array in the target direction, the target direction points from the first side to the second side, and the wavelength is a wavelength corresponding to an operating frequency band of the first antenna array and the second antenna array.

In this application, the spacing between the two adjacent rows of antenna elements of the first antenna array in the target direction and the spacing between the two adjacent rows of antenna elements of the second antenna array in the target direction are set in the foregoing manner, so that an interference signal transmitted by the first antenna array to the second antenna array can be suppressed, and an interference signal transmitted by the second antenna array to the first antenna array can be suppressed. Therefore, good isolation between the first antenna array and the second antenna array can be achieved without a need to additionally set metal fences and a metal strip array.

In a possible implementation, if a main beam generated by the first antenna array does not deflect relative to a direction perpendicular to an array plane, the spacing between the two adjacent rows of antenna elements of the first antenna array in the target direction is half the wavelength.

In a possible implementation, if a main beam generated by the first antenna array deflects toward the first side relative to a direction perpendicular to an array plane, the spacing between the two adjacent rows of antenna elements of the first antenna array in the target direction is less than half the wavelength. Alternatively, if a main beam generated by the first antenna array deflects toward the second side relative to a direction perpendicular to an array plane, the spacing between the two adjacent rows of antenna elements of the first antenna array in the target direction is greater than half the wavelength.

In a possible implementation, if the main beam generated by the first antenna array deflects toward the first side relative to the direction perpendicular to the array plane, the spacing $d_a$ between the two adjacent rows of antenna elements of the first antenna array in the target direction satisfies $d_a = (1 - \frac{\delta_a}{\pi}) \times \frac{\lambda}{2}$, where $\delta_a$ is the feeding phase difference between the two adjacent rows of antenna elements of the first antenna array in the target direction, and $\lambda$ is the wavelength. Alternatively, if the main beam generated by the first antenna array deflects toward the second side, $d_a$ satisfies

$$d_a = (1 + \frac{\delta_a}{\pi}) \times \frac{\lambda}{2}.$$

In a possible implementation, if a main beam generated by the second antenna array does not deflect relative to the direction perpendicular to the array plane, the spacing between the two adjacent rows of antenna elements of the second antenna array in the target direction is half the wavelength.

In a possible implementation, if a main beam generated by the second antenna array deflects toward the first side relative to the direction perpendicular to the array plane, the spacing between the two adjacent rows of antenna elements of the second antenna array in the target direction is greater than half the wavelength. Alternatively, if a main beam generated by the second antenna array deflects toward the second side relative to the direction perpendicular to the array plane, the spacing between the two adjacent rows of antenna elements of the second antenna array in the target direction is less than half the wavelength.

In a possible implementation, if the main beam generated by the second antenna array deflects toward the first side relative to the direction perpendicular to the array plane, the spacing $d_b$ between the two adjacent rows of antenna elements of the second antenna array in the target direction satisfies $d_b = (1 + \frac{\delta_b}{\pi}) \times \frac{\lambda}{2}$, where $\delta_b$ is the feeding phase difference between the two adjacent rows of antenna elements of the second antenna array in the target direction. Alternatively, if the main beam generated by the second antenna array deflects toward the second side relative to the direction perpendicular to the array plane, the spacing $d_b$ between the two adjacent rows of antenna elements of the second antenna array in the target direction satisfies

$$d_b = (1 - \frac{\delta_b}{\pi}) \times \frac{\lambda}{2}.$$

In a possible implementation, if the first antenna array includes M rows of antenna elements in the target direction, excitation voltage amplitudes of the M rows of antenna elements satisfy a distribution of first increasing and then decreasing in the target direction; and if the second antenna array includes N rows of antenna elements in the target direction, excitation voltage amplitudes of the N rows of antenna elements satisfy a distribution of first increasing and then decreasing in the target direction.

In a possible implementation, a ratio of the excitation voltage amplitudes of the M rows of antenna elements in the first antenna array is sequentially $C_{M-1}^0 : C_{M-1}^1 : C_{M-1}^2 : \cdots : C_{M-1}^{M-2} : C_{M-1}^{M-1}$ in the target direction, and a ratio of the excitation voltage amplitudes of the N rows of antenna elements in the second antenna array is sequentially $C_{N-1}^0 : C_{N-1}^1 : C_{N-1}^2 : \cdots : C_{N-1}^{N-2} : C_{N-1}^{N-1}$ in the target direction.

In a possible implementation, if the first antenna array includes the M rows of antenna elements in the target direction, a sum of excitation voltage amplitudes of odd-numbered rows of antenna elements among the M rows of antenna elements is equal to a sum of excitation voltage amplitudes of even-numbered rows of antenna elements among the M rows of antenna elements; and if the second antenna array includes the N rows of antenna elements in the target direction, a sum of excitation voltage amplitudes of odd-numbered rows of antenna elements among the N rows of antenna elements is equal to a sum of excitation voltage amplitudes of even-numbered rows of antenna elements among the N rows of antenna elements.

In a possible implementation, the first side is an upper side, and the second side is a lower side. Alternatively, the first side is a left side, and the second side is a right side.

A second aspect of this application provides an antenna system.

The antenna system includes a first antenna array and a second antenna array, where the first antenna array and the second antenna array are separately disposed on a first side and a second side. The first antenna array includes one row of antenna elements in a target direction, a spacing between two adjacent rows of antenna elements of the second antenna array in the target direction is determined based on a wavelength and a feeding phase difference between the two adjacent rows of antenna elements of the second antenna array in the target direction, the target direction points from the first side to the second side, and the wavelength is a wavelength corresponding to an operating frequency band of the first antenna array and the second antenna array.

In this application, the spacing between the two adjacent rows of antenna elements of the second antenna array in the target direction is set in the foregoing manner, so that an interference signal transmitted by the second antenna array to the first antenna array can be suppressed. Therefore, good isolation between the first antenna array and the second antenna array can be achieved without a need to additionally set metal fences and a metal strip array.

In a possible implementation, if a main beam generated by the second antenna array does not deflect relative to a direction perpendicular to an array plane, the spacing between the two adjacent rows of antenna elements of the second antenna array in the target direction is half the wavelength.

In a possible implementation, if the second antenna array is disposed on the first side, and a main beam generated by the second antenna array deflects toward the first side relative to a direction perpendicular to an array plane, the spacing between the two adjacent rows of antenna elements of the second antenna array in the target direction is less than half the wavelength. Alternatively, if the second antenna array is disposed on the first side, and a main beam generated by the second antenna array deflects toward the second side relative to a direction perpendicular to an array plane, the spacing between the two adjacent rows of antenna elements of the second antenna array in the target direction is greater than half the wavelength.

In a possible implementation, if the second antenna array is disposed on the second side, and a main beam generated by the second antenna array deflects toward the first side relative to a direction perpendicular to an array plane, the spacing between the two adjacent rows of antenna elements of the second antenna array in the target direction is greater than half the wavelength. Alternatively, if the second antenna array is disposed on the second side, and a main beam generated by the second antenna array deflects toward the second side relative to a direction perpendicular to an array plane, the spacing between the two adjacent rows of antenna elements of the second antenna array in the target direction is less than half the wavelength.

In a possible implementation, if the second antenna array is disposed on the first side, and the main beam generated by the second antenna array deflects toward the first side relative to the direction perpendicular to the array plane, the spacing $d_a$ between the two adjacent rows of antenna elements of the second antenna array in the target direction satisfies

$$d_a = \left(1 - \frac{\delta_a}{\pi}\right) \times \frac{\lambda}{2}$$ , where $\delta_a$ is the feeding phase difference between the two adjacent rows of antenna elements of the second antenna array in the target direction, and $\lambda$ is the wavelength.

Alternatively,
if the second antenna array is disposed on the first side, and the main beam generated by the second antenna array deflects toward the second side, $d_a$ satisfies

$$d_a = \left(1 + \frac{\delta_a}{\pi}\right) \times \frac{\lambda}{2}.$$

In a possible implementation, if the second antenna array is disposed on the second side, and the main beam generated by the second antenna array deflects toward the first side relative to the direction perpendicular to the array plane, the spacing $d_b$ between the two adjacent rows of antenna elements of the second antenna array in the target direction satisfies

$$d_b = \left(1 + \frac{\delta_b}{\pi}\right) \times \frac{\lambda}{2}$$ , where $\delta_b$ is the feeding phase difference between the two adjacent rows of antenna elements of the second antenna array in the target direction. Alternatively, if the second antenna array is disposed on the second side, and the main beam generated by the second antenna array deflects toward the second side relative to the direction perpendicular to the array plane, the spacing $d_b$ between the two adjacent rows of antenna elements of the second antenna array in the target direction satisfies $$d_b = \left(1 - \frac{\delta_b}{\pi}\right) \times \frac{\lambda}{2}.$$

In a possible implementation, if the second antenna array includes N rows of antenna elements in the target direction, excitation voltage amplitudes of the N rows of antenna elements satisfy a distribution of first increasing and then decreasing in the target direction.

In a possible implementation, if the second antenna array includes M rows of antenna elements in the target direction, a ratio of excitation voltage amplitudes of the M rows of antenna elements is sequentially

$$C_{M-1}^0 : C_{M-1}^1 : C_{M-1}^2 : \cdots : C_{M-1}^{M-2} : C_{M-1}^{M-1}$$ in the target direction.

In a possible implementation, a sum of excitation voltage amplitudes of odd-numbered rows of antenna elements among the N rows of antenna elements of the second antenna array is equal to a sum of excitation voltage amplitudes of even-numbered rows of antenna elements among the N rows of antenna elements.

In a possible implementation, the first side is an upper side, and the second side is a lower side. Alternatively, the first side is a left side, and the second side is a right side.

In a possible implementation, the second antenna array includes at least three rows of antenna elements in the target direction.

A third aspect of this application provides an antenna pole station.

The antenna pole station includes a pole, a mounting member, a baffle plate, and an antenna module, where the antenna system in the first aspect or the second aspect is disposed in the antenna module. The mounting member is fastened to the pole, the baffle plate and the antenna module are fastened to the mounting member, and the baffle plate is disposed between the pole and the antenna module.

In this application, the baffle plate is disposed between the antenna module and the pole, so that electromagnetic waves generated by an MT antenna and a DU antenna in the antenna system can be scattered or adjusted. Therefore, it is ensured that isolation between the MT antenna and the DU antenna is not affected by the pole and the mounting member.

In a possible implementation, the baffle plate is in a rectangular or curved shape.

## BRIEF DESCRIPTION OF DRAWINGS

FIG. 1 is a diagram of a structure of an IAB node according to this application;
FIG. 2 is a diagram of an application scenario according to this application;
FIG. 3 is another diagram of an application scenario according to this application;
FIG. 4 is a diagram of an antenna system in a conventional technology;
FIG. 5 is a diagram of an antenna system according to this application;
FIG. 6 is another diagram of an antenna system according to this application;

FIG. 7 is a diagram of a principle of implementing high isolation according to this application;

FIG. 8 is a diagram of a difference between isolation of an antenna system in this application and isolation of an antenna system in a conventional technology;

FIG. 9a is a diagram of a gain of an antenna system according to this application;

FIG. 9b is another diagram of a gain of an antenna system according to this application;

FIG. 9c shows isolation corresponding to different ratios of excitation voltage amplitudes according to this application;

FIG. 10 is another diagram of an antenna system according to this application;

FIG. 11 is another diagram of a principle of implementing high isolation according to this application;

FIG. 12 is another diagram of a difference between isolation of an antenna system in this application and isolation of an antenna system in a conventional technology;

FIG. 13a is a diagram of a gain of an antenna system according to this application;

FIG. 13b is another diagram of a gain of an antenna system according to this application;

FIG. 14 is another diagram of an antenna system according to this application;

FIG. 15 is another diagram of a principle of implementing high isolation according to this application;

FIG. 16 is another diagram of a difference between isolation of an antenna system in this application and isolation of an antenna system in a conventional technology;

FIG. 17a is a diagram of a gain of an antenna system according to this application;

FIG. 17b is another diagram of a gain of an antenna system according to this application;

FIG. 18 is another diagram of an antenna system according to this application;

FIG. 19 is another diagram of a principle of implementing high isolation according to this application;

FIG. 20 is another diagram of a difference between isolation of an antenna system in this application and isolation of an antenna system in a conventional technology;

FIG. 21a is a diagram of a gain of an antenna system according to this application;

FIG. 21b is another diagram of a gain of an antenna system according to this application;

FIG. 22 is a diagram of a structure of an antenna pole station according to this application; and

FIG. 23 is another diagram of a structure of an antenna pole station according to this application.

## DESCRIPTION OF EMBODIMENTS

The following describes embodiments of this application with reference to accompanying drawings. It is clear that the described embodiments are merely some rather than all of embodiments of this application. A person of ordinary skill in the art may know that, with development of technologies and emergence of new scenarios, technical solutions provided in embodiments of this application are also applicable to similar technical problems.

In the specification, claims, and accompanying drawings of this application, terms "first", "second", and the like are intended to distinguish between similar objects but do not necessarily indicate a specific order or sequence. It should be understood that data termed in such a way may be interchangeable in proper circumstances, so that embodiments described herein can be implemented in an order other than the order illustrated or described herein. In addition, terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to the process, method, product, or device.

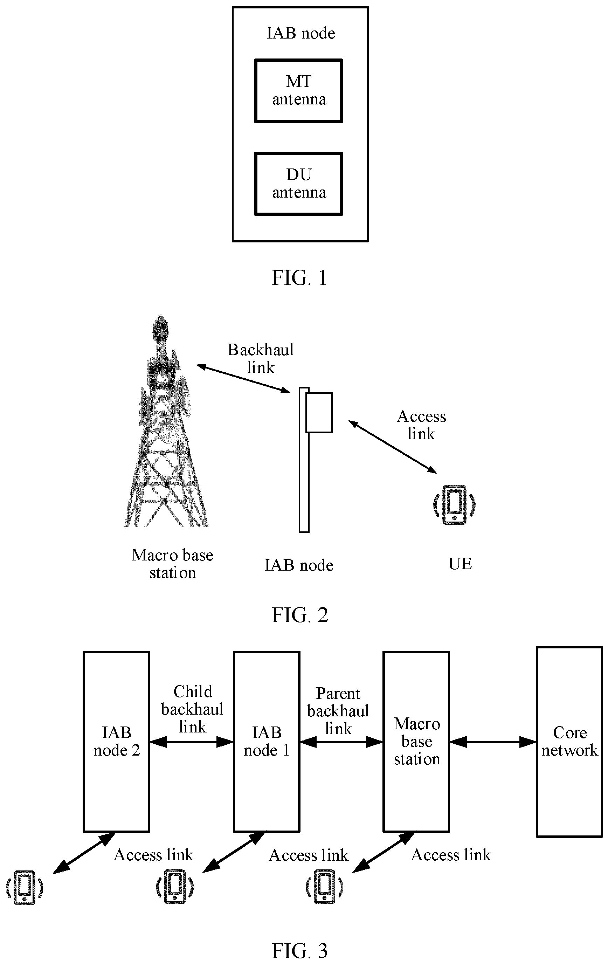

With reference to FIG. 1, antennas of an IAB node include two parts: an MU antenna and a DU antenna, and the two antennas are responsible for different functions, to implement coverage extension and blind spot filling of a macro base station, and maximize capacity potential and a spectrum value of MIMO. With reference to FIG. 2, a typical application scenario of the IAB node includes a backhaul link and an access link. The DU antenna of the IAB node provides a wireless access service for a UE through the access link. The MT antenna of the IAB node is connected to the macro base station through the backhaul link, and transmits service data from the UE to the macro base station. It should be noted that FIG. 2 is merely a simple example of an application scenario, and the application scenario of the IAB node may alternatively include a plurality of IAB nodes and a plurality of UEs. For example, with reference to FIG. 3, the application scenario includes an IAB node 1, an IAB node 2, and a macro base station. The macro base station can access a core network, an MT antenna of the IAB node 1 accesses the macro base station through a parent backhaul link, and an MT antenna of the IAB node 2 accesses the IAB node 1 through a child backhaul link. In addition, the IAB node 1, the IAB node 2, and a DU antenna of the macro base station provide access services for the UEs through access links.

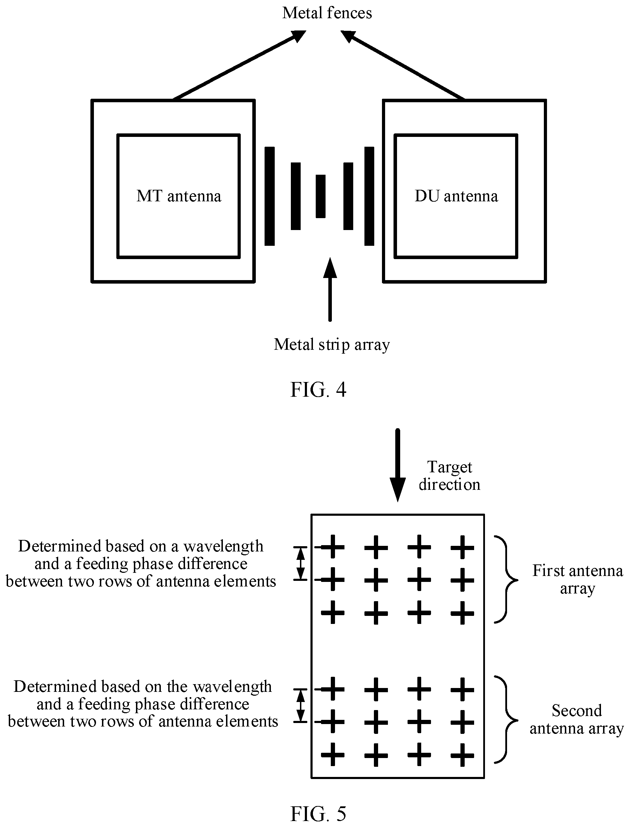

In a conventional technology, due to low isolation between the MT antenna and the DU antenna, the IAB node usually operates in a frequency division duplex mode or a time division duplex mode, and cannot simultaneously perform signal receiving and sending in a same frequency band. To be specific, the MT antenna cannot receive a signal from the macro base station when the DU antenna sends a signal to the UE, and the MT antenna cannot send a signal to the macro base station when the DU antenna receives a signal from the UE. To improve the isolation between the MT antenna and the DU antenna, with reference to FIG. 4, in the conventional technology, metal fences are used to enclose the MT antenna and the DU antenna, and interference between the two antennas is reduced by reflecting electromagnetic waves by using the metal fences. In addition, a metal strip array is further disposed between the MT antenna and the DU antenna, and the isolation between the two antennas is further improved by suppressing a surface wave. However, the metal fences and the metal strip array occupy a large amount of space, affecting a design of another part of the IAB node.

Embodiments of this application provide an antenna system, to improve isolation between an MT antenna and a DU antenna.

An antenna array in embodiments of this application may be used as an IAB node, and is applied to the application scenario shown in FIG. 2 or FIG. 3.

With reference to FIG. 5, the antenna system in embodiments of this application includes a first antenna array and a second antenna array. The first antenna array is disposed on a first side, and the second antenna array is disposed on a second side. The first antenna array and the second antenna array are separately used as the MT antenna and the DU antenna. For example, the first antenna array is used as the MT antenna, or the first antenna array is used as the DU antenna. In a case, the first side is, for example, an upper side, and the second side is, for example, a lower side. Alternatively, in another case, the first side is a left side, and the second side is a right side. Certainly, the first side and the second side are not limited to the foregoing cases. In a case, the first antenna array and the second antenna array can be configured to simultaneously perform signal receiving and sending in a same frequency band. To be specific, in the same frequency band, the MT antenna can also receive a signal from a macro base station when the DU antenna sends a signal to a UE, and the MT antenna can also send a signal to the macro base station when the DU antenna receives a signal from the UE.

A spacing between two adjacent rows of antenna elements of the first antenna array in a target direction is determined based on a wavelength and a feeding phase difference between the two adjacent rows of antenna elements. Similarly, a spacing between two adjacent rows of antenna elements of the second antenna array in the target direction is determined based on the wavelength and a feeding phase difference between the two adjacent rows of antenna elements. The target direction is a direction pointing from the first side to the second side. The first antenna array and the second antenna array use a same operating frequency band, and the wavelength is a wavelength corresponding to the operating frequency band, for example, may be a wavelength corresponding to a center frequency, a wavelength corresponding to a high frequency, or a wavelength corresponding to a low frequency in the operating frequency band. In a manner, the wavelength may be the wavelength corresponding to the center frequency in the operating frequency band.

In a specific implementation, if a main beam generated by the first antenna array deflects toward the first side relative to a direction perpendicular to an array plane, the spacing $d_{a1}$ between the two adjacent rows of antenna elements of the first antenna array in the target direction satisfies the following formula (1):

$$d_{a1} = (1 - \frac{\delta_{a1}}{\pi}) \times \frac{\lambda}{2} \qquad (1)$$

$\delta_{a1}$ is the feeding phase difference between the two adjacent rows of antenna elements, and $\lambda$ is the wavelength.

If the main beam generated by the first antenna array deflects toward the second side relative to the direction perpendicular to the array plane, the spacing $d_{a2}$ between the two adjacent rows of antenna elements of the first antenna array in the target direction satisfies the following formula (2):

$$d_{a2} = (1 + \frac{\delta_{a2}}{\pi}) \times \frac{\lambda}{2} \qquad (2)$$

$\delta_{a2}$ is the feeding phase difference between the two adjacent rows of antenna elements.

If a main beam generated by the second antenna array deflects toward the first side relative to the direction perpendicular to the array plane, the spacing $d_{b1}$ between the two adjacent rows of antenna elements of the second antenna array in the target direction satisfies the following formula (3):

$$d_{b1} = (1 + \frac{\delta_{b1}}{\pi}) \times \frac{\lambda}{2} \qquad (3)$$

$\delta_{b1}$ is the feeding phase difference between the two adjacent rows of antenna elements.

Alternatively, if the main beam generated by the second antenna array deflects toward the second side relative to the direction perpendicular to the array plane, the spacing $d_{b2}$ between the two adjacent rows of antenna elements of the second antenna array in the target direction satisfies the following formula (4):

$$d_{b2} = (1 - \frac{\delta_{b2}}{\pi}) \times \frac{\lambda}{2} \qquad (4)$$

$\delta_{b2}$ is the feeding phase difference between the two adjacent rows of antenna elements.

If an antenna array whose main beam does not deflect is present in the first antenna array and the second antenna array, in other words, the main beam generated by the antenna array is perpendicular to the array plane, because a feeding phase difference between two adjacent rows of antenna elements of the antenna array in the target direction is zero, it is derived that a spacing between the two adjacent rows of antenna elements of the antenna array in the target direction is half the wavelength. Certainly, during actual implementation, an appropriate value may alternatively be selected within a range greater than half the wavelength or less than half the wavelength for the spacing.

In another specific implementation, if the main beam generated by the first antenna array deflects toward the first side relative to the direction perpendicular to the array plane, the spacing between the two adjacent rows of antenna elements of the first antenna array in the target direction may not be set completely according to the formula (1), and an appropriate value may alternatively be selected within a range less than half the wavelength for the spacing.

If the main beam generated by the first antenna array deflects toward the second side relative to the direction perpendicular to the array plane, the spacing between the two adjacent rows of antenna elements of the first antenna array in the target direction may not be set completely according to the formula (2), and an appropriate value may alternatively be selected within a range greater than half the wavelength for the spacing.

If the main beam generated by the second antenna array deflects toward the first side relative to the direction perpendicular to the array plane, the spacing between the two adjacent rows of antenna elements of the second antenna array in the target direction may not be set completely according to the formula (3), and an appropriate value may alternatively be selected within the range greater than half the wavelength for the spacing.

If the main beam generated by the second antenna array deflects toward the second side relative to the direction perpendicular to the array plane, the spacing between the two adjacent rows of antenna elements of the second antenna array in the target direction may not be set completely according to the formula (4), and an appropriate value may alternatively be selected within the range less than half the wavelength for the spacing.

It should be noted that, excitation voltage amplitudes of all antenna elements in one row of antenna elements in the first antenna array and the second antenna array in the target direction are the same. Based on the foregoing descriptions, if the first antenna array includes M rows of antenna elements in the target direction, excitation voltage amplitudes of the M rows of antenna elements satisfy a distribution of first increasing and then decreasing in the target direction; and if the second antenna array includes N rows of antenna elements in the target direction, excitation voltage amplitudes of the N rows of antenna elements satisfy a distribution of first increasing and then decreasing in the target direction. That is, a cone-shape distribution is satisfied. For example, in a manner, if the first antenna array includes the M rows of antenna elements in the target direction, a ratio of the excitation voltage amplitudes of the M rows of antenna elements is sequentially

$$C_{M-1}^0 : C_{M-1}^1 : C_{M-1}^2 : \cdots : C_{M-1}^{M-2} : C_{M-1}^{M-1}$$

in the target direction; and if the second antenna array includes the N rows of antenna elements in the target direction, a ratio of the excitation voltage amplitudes of the N rows of antenna elements is sequentially

$$C_{N-1}^0 : C_{N-1}^1 : C_{N-1}^2 : \cdots : C_{N-1}^{N-2} : C_{N-1}^{N-1}$$

in the target direction.

Alternatively, in another case, if the first antenna array includes the M rows of antenna elements in the target direction, a sum of excitation voltage amplitudes of odd-numbered rows of antenna elements among the M rows of antenna elements is equal to a sum of excitation voltage amplitudes of even-numbered rows of antenna elements among the M rows of antenna elements; and if the second antenna array includes the N rows of antenna elements in the target direction, a sum of excitation voltage amplitudes of odd-numbered rows of antenna elements among the N rows of antenna elements is equal to a sum of excitation voltage amplitudes of even-numbered rows of antenna elements among the N rows of antenna elements. For example, if the first antenna array includes four rows of antenna elements in the target direction, a sum of excitation voltage amplitudes of a 1st row of antenna elements and a 3rd row of antenna elements of the first antenna array in the target direction is equal to a sum of excitation voltage amplitudes of a 2nd row of antenna elements and a 4th row of antenna elements in the target direction.

The foregoing summarizes antenna arrays in embodiments of this application. During actual implementation, at least one antenna array including three or more rows of antenna elements in the target direction is present in the first antenna array and the second antenna array. In a special case, in the first antenna array and the second antenna array, one antenna array includes only one row of antenna elements in the target direction, and the other antenna array is disposed in the described manner.

The following describes the antenna system in embodiments of this application with reference to more specific designs.

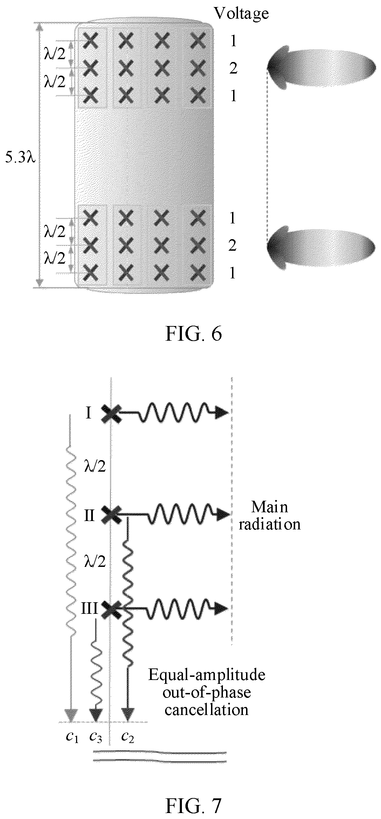

With reference to FIG. 6, in a possible design, the first antenna array is disposed on the upper side, the second antenna array is disposed on the lower side, and the first antenna array and the second antenna array each include three rows of antenna elements in the target direction. In addition, main beams generated by the first antenna array and the second antenna array do not deflect. Based on the foregoing descriptions, a spacing between two adjacent rows of antenna elements of the first antenna array in the target direction is half the wavelength, a spacing between two adjacent rows of antenna elements of the second antenna array in the target direction is also half the wavelength, and a spacing between an upper edge of the first antenna array and a lower edge of the second antenna array is 5.3 times the wavelength. In an optional implementation, a ratio of excitation voltage amplitudes of rows of antenna elements from top to bottom in the first antenna array may be set to 1:2:1, and a ratio of excitation voltage amplitudes of rows of antenna elements from top to bottom in the second antenna array is also 1:2:1. It should be noted that a ratio relationship of excitation voltage amplitudes may be implemented by adjusting a feeder width of each row of antenna elements in a power divider feed network, and details are not described herein.

With reference to FIG. 7, the following analyzes, with reference to a principle, isolation of the antenna system shown in FIG. 6. Isolation between antenna arrays in this embodiment of this application is improved based on an interference signal suppression principle. The first antenna array is used as an example. Each row of antenna elements of the first antenna array mainly radiates with feed signals that are perpendicular to the array plane, and the feed signal does not affect the lower second antenna array. However, each row of antenna elements further generates an interference signal, and the signal is propagated to the lower second antenna array in a direction perpendicular to the feed signal, causing deterioration of the isolation between the two antenna arrays. In FIG. 6, three rows of antenna elements from top to bottom in the first antenna array are sequentially denoted as an antenna element row I, an antenna element row II, and an antenna element row III, an interference signal generated by the antenna element row I is denoted as $c_1$, an interference signal generated by the antenna element row II is denoted as $c_2$, and an interference signal generated by the antenna element row III is denoted as $c_3$. A reference plane is taken below the first antenna array. It is assumed that a phase of the interference signal $c_3$ is 0. In this case, it is not difficult to find that after the interference signal $c_1$ is propagated an additional one-wavelength spacing compared to the interference signal $c_3$, a phase difference between the interference signal $c_1$ and the interference signal $c_3$ is 360°, resulting in in-phase superimposition of the interference signal $c_1$ and the interference signal $c_3$. However, the interference signal $c_2$ is propagated an additional half-wavelength spacing compared to the interference signal $c_3$, and a phase difference between the interference signal $c_2$ and the interference signal $c_3$ is 180°, resulting in out-of-phase cancellation between the interference signal $c_2$ and interference signals $c_1$ and $c_3$. Based on this, when excitation voltage amplitudes of the interference signal $c_1$, the interference signal $c_2$, and the interference signal $c_3$ satisfy $c_1+c_3=c_2$, good interference signal suppression can be implemented for the first antenna array, impact of the interference signals on the second antenna array can be avoided, and further good isolation between the first antenna array and the second antenna array can be achieved. Based on the foregoing descriptions, excitation voltage amplitude of the interfer-

ence signal $c_1$:excitation voltage amplitude of the interference signal $c_2$:excitation voltage amplitude of the interference signal $c_3$ may be selected as 1:2:1. A principle of implementing good interference signal suppression for the second antenna array is similar to that described above, and details are not described herein again.

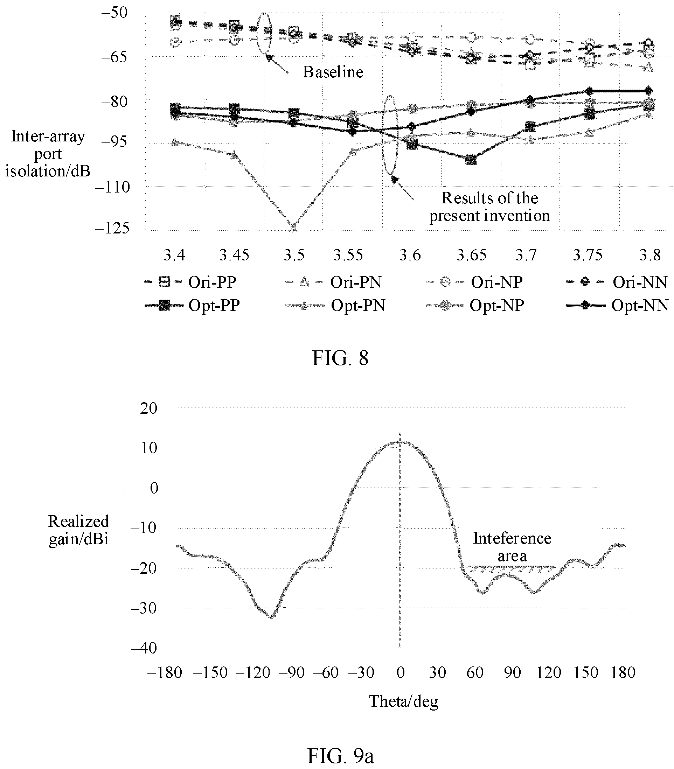

With reference to FIG. 8, the following describes, by using a diagram, an improvement in the isolation of the antenna system in this embodiment of this application compared to an antenna system in a conventional technology. In FIG. 8, a vertical coordinate is isolation, a horizontal coordinate is an operating frequency of an antenna array, a line identified with "Ori" indicates isolation between an MT antenna and a DU antenna in the antenna system in the conventional technology, and a line identified with "Opt" indicates isolation between an MT antenna and a DU antenna in the antenna system shown in FIG. 6. In FIG. 8, an identifier "PP" indicates a case in which both an MT antenna and a DU antenna are +45° polarized, identifiers "PN" and "NP" indicate a case in which one of an MT antenna and a DU antenna is +45° polarized and the other is -45° polarized, and an identifier "NN" indicates a case in which both an MT antenna and a DU antenna are -45° polarized. With reference to the foregoing descriptions, for example, in FIG. 8, a line identified as "Ori-PP" indicates isolation in a case in which both the MT antenna and the DU antenna in the antenna system in the conventional technology are +45° polarized, and a line identified as "Opt-PP" indicates isolation in a case in which both the MT antenna and the DU antenna in the antenna system shown in FIG. 6 are +45° polarized. It is not difficult to learn that, by using the line identified with "Ori" as a baseline, the isolation between the MT antenna and the DU antenna in the antenna system in this application is increased by 20 dB on average.

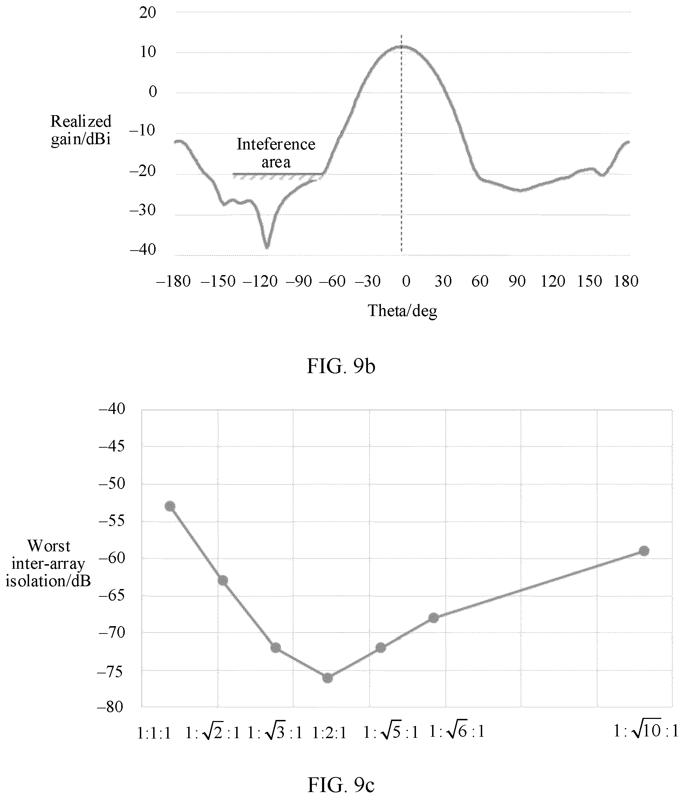

With reference to FIG. 9a, a vertical coordinate in FIG. 9a represents a gain corresponding to the first antenna array in FIG. 6, and a horizontal coordinate is an angle, where 0 degrees corresponds to the direction perpendicular to the array plane, 0 degrees to 180 degrees are sequentially clockwise deflected directions relative to the direction perpendicular to the array plane, and 0 degrees to -180 degrees are sequentially counterclockwise deflected directions relative to the direction perpendicular to the array plane. An area approximately 90 degrees clockwise from the direction perpendicular to the array plane may be understood as an interference area that affects the second antenna array. Similarly, with reference to FIG. 9b, a vertical coordinate in FIG. 9b represents a gain corresponding to the second antenna array in FIG. 6, where 0 degrees corresponds to the direction perpendicular to the array plane, 0 degrees to 180 degrees are sequentially clockwise deflected directions relative to the direction perpendicular to the array plane, and 0 degrees to -180 degrees are sequentially counterclockwise deflected directions relative to the direction perpendicular to the array plane. An area approximately 90 degrees counterclockwise from the direction perpendicular to the array plane may be understood as an interference area that affects the first antenna array. In FIG. 9a and FIG. 9b, gains corresponding to interference areas are low. Therefore, good isolation can be achieved between the MT antenna and the DU antenna in the antenna system shown in FIG. 6.

Certainly, in the antenna system shown in FIG. 6, a ratio of excitation voltage amplitudes of rows of antenna elements from top to bottom in the first antenna array or the second antenna array may alternatively be in another case. With reference to FIG. 9c, a vertical coordinate in FIG. 9c is the isolation, and a horizontal coordinate is the ratio of the excitation voltage amplitudes. It is not difficult to learn that, when the ratio of the excitation voltage amplitudes is 1:2:1, optimal isolation can be achieved.

In this embodiment of this application, metal fences and a metal strip array do not need to be additionally disposed in the antenna system, and good isolation can be achieved only by adjusting the spacing between the two adjacent rows of antenna elements and the ratio of the excitation voltage amplitudes of the rows of antenna elements. Therefore, a large amount of space is saved.

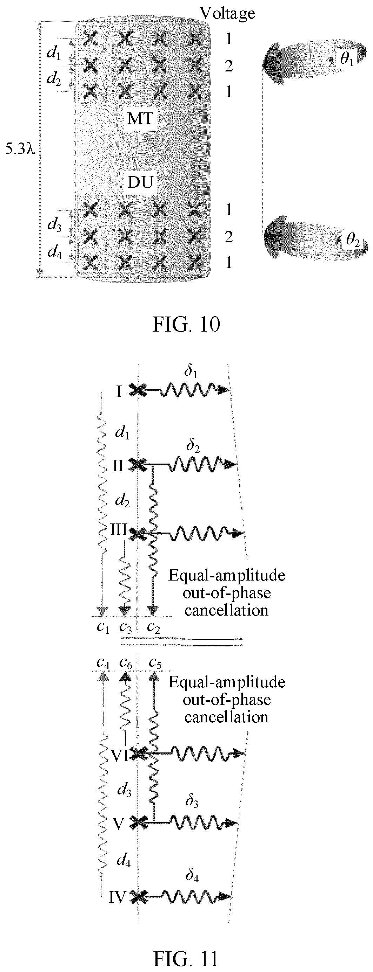

With reference to FIG. 10, in another specific design, the first antenna array is disposed on the upper side, the second antenna array is disposed on the lower side, the first antenna array and the second antenna array each include three rows of antenna elements in the target direction, and a distance between an upper edge of the first antenna array and a lower edge of the second antenna array is 5.3 times the wavelength. Spacings between three rows of antenna elements of the first antenna array in the target direction are separately $d_1$ and $d_2$, and spacings between three rows of antenna elements of the second antenna array in the target direction are separately $d_3$ and $d_4$. In addition, the main beam generated by the first antenna array deflects toward the upper side by five degrees relative to the direction perpendicular to the array plane, and the main beam generated by the second antenna array deflects toward the lower side by five degrees relative to the direction perpendicular to the array plane. It should be noted that deflection of main beams of the first antenna array and the second antenna array may be implemented by adjusting a feeder length of each row of antenna elements in a power divider feed network, and details are not described herein. In an optional implementation, a ratio of excitation voltage amplitudes of the rows of antenna elements from top to bottom in the first antenna array may be set to 1:2:1, and a ratio of excitation voltage amplitudes of the rows of antenna elements from top to bottom in the second antenna array is also 1:2:1. It should be noted that, in FIG. 10, the first antenna array is used as an MT antenna, and the second antenna array is used as a DU antenna.

With reference to FIG. 11, six rows of antenna elements from top to bottom in FIG. 10 are sequentially denoted as an antenna element row I, an antenna element row II, an antenna element row III, an antenna element row IV, an antenna element row V, and an antenna element row VI in FIG. 11. An interference signal generated by the antenna element row I is denoted as c1, an interference signal generated by the antenna element row II is denoted as c2, an interference signal generated by the antenna element row III is denoted as c3, an interference signal generated by the antenna element row IV is denoted as c6, an interference signal generated by the antenna element row V is denoted as c5, and an interference signal generated by the antenna element row VI is denoted as c4.

A feed signal of the antenna element row III is used as a reference, and a phase lag of a feed signal of the antenna element row I and a phase lag of a feed signal of the antenna element row II are respectively $\delta_1$ and $\delta_2$ (where $\delta_1 > \delta_2 > 0$). A feed signal of the antenna element row IV is used as a reference, and a phase lag of a feed signal of the antenna element row V and a phase lag of a feed signal of the antenna element row VI are respectively $\delta_3$ and $\delta_4$ (where $\delta_4 > \delta_3 > 0$).

A reference plane is taken between the first antenna array and the second antenna array, and a phase difference $\varphi_1$ between the interference signal c1 and the interference signal c3 satisfies the following formula (5):

$$\varphi_1 = \frac{2\pi(d_1+d_2)}{\lambda} + \delta_1 \qquad (5)$$

A phase difference $\varphi_2$ between the interference signal c2 and the interference signal c3 satisfies the following formula (6):

$$\varphi_2 = \frac{2\pi d_2}{\lambda} + \delta_2 \qquad (6)$$

Based on the foregoing formula (5) and formula (6), if in-phase superimposition needs to be implemented on the interference signal c1 and the interference signal c3, and out-of-phase cancellation needs to be implemented on the interference signal c1 and the interference signal c2, it can be derived that $d_1$ satisfies $d_1 = (1 - \frac{\delta_1 - \delta_2}{\pi}) \times \frac{\lambda}{2}$, and $d_2$ satisfies $d_2 = (1 - \frac{\delta_2}{\pi}) \times \frac{\lambda}{2}$.

Based on a similar derivation manner, it can be obtained that $d_3$ satisfies $d_3 = (1 - \frac{\delta_3}{\pi}) \times \frac{\lambda}{2}$, and $d_4$ satisfies $d_4 = (1 - \frac{\delta_4 - \delta_3}{\pi}) \times \frac{\lambda}{2}$.

Based on the foregoing descriptions, specific

values of $d_1$, $d_2$, $d_3$, and $d_4$ can be obtained, to implement interference signal suppression.

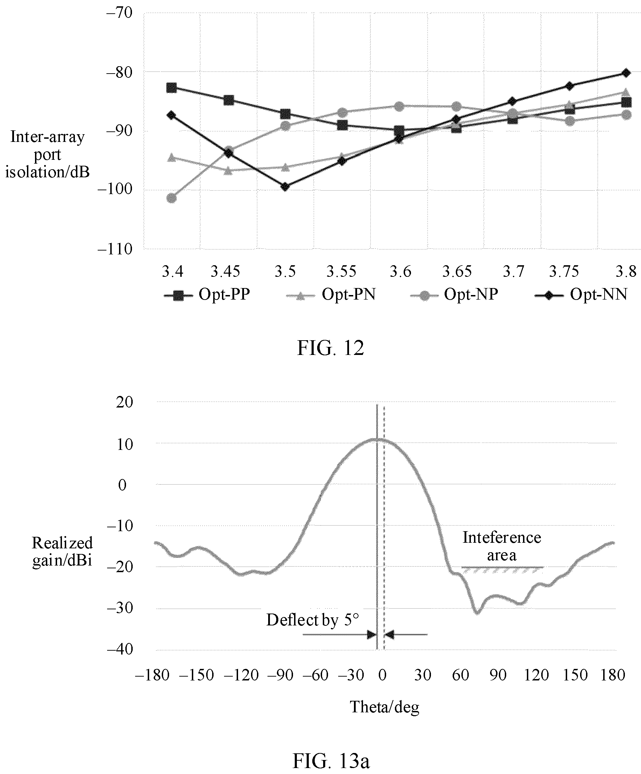

With reference to FIG. 12, it is not difficult to learn that good isolation can also be achieved between the MT antenna and the DU antenna in the antenna system shown in FIG. 10.

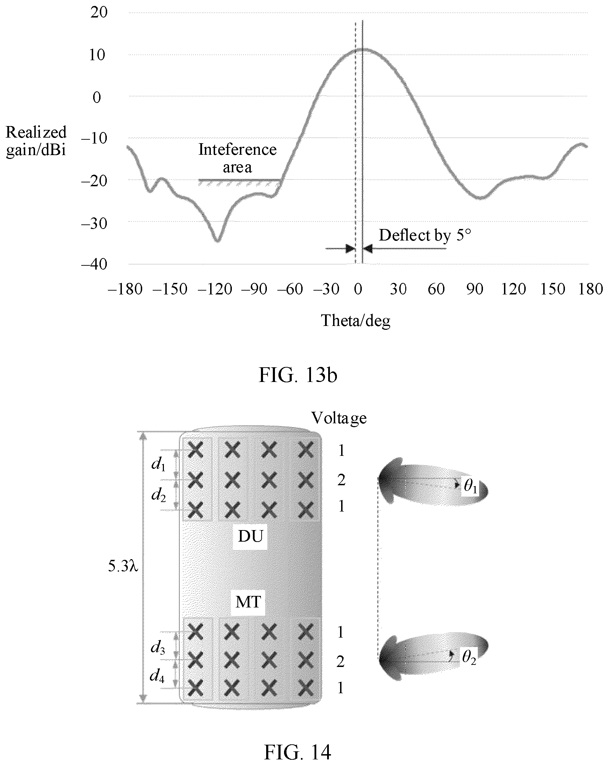

With reference to FIG. 13a, a vertical coordinate in FIG. 13a represents a gain corresponding to the first antenna array in FIG. 10, where 0 degrees corresponds to the direction perpendicular to the array plane, and -5 degrees is a maximum direction of the main beam generated by the first antenna array. An area approximately 90 degrees clockwise from the direction perpendicular to the array plane may be understood as an interference area that affects the second antenna array. Similarly, with reference to FIG. 13b, a vertical coordinate in FIG. 13b represents a gain corresponding to the second antenna array in FIG. 10, where 0 degrees indicates the direction perpendicular to the array plane, and +5 degrees is a maximum direction of the main beam generated by the second antenna array. An area approximately 90 degrees counterclockwise from the direction perpendicular to the array plane may be understood as an interference area that affects the first antenna array. In FIG. 13a and FIG. 13b, gains corresponding to interference areas are low. Therefore, good isolation can be achieved between the MT antenna and the DU antenna in the antenna system shown in FIG. 10.

With reference to FIG. 14, in another specific design, the first antenna array is disposed on the upper side, the second antenna array is disposed on the lower side, the first antenna array and the second antenna array each include three rows of antenna elements in the target direction, and a distance between an upper edge of the first antenna array and a lower edge of the second antenna array is 5.3 times the wavelength. Spacings between three rows of antenna elements of the first antenna array in the target direction are separately $d_1$ and $d_2$, and spacings between three rows of antenna elements of the second antenna array in the target direction are separately $d_3$ and $d_4$. In addition, the main beam generated by the first antenna array deflects toward the lower side by five degrees relative to the direction perpendicular to the array plane, and the main beam generated by the second antenna array deflects toward the upper side by five degrees relative to the direction perpendicular to the array plane. In an optional implementation, a ratio of excitation voltage amplitudes of the rows of antenna elements from top to bottom in the first antenna array may be set to 1:2:1, and a ratio of excitation voltage amplitudes of the rows of antenna elements from top to bottom in the second antenna array is also 1:2:1. It should be noted that, in FIG. 14, the first antenna array is used as a DU antenna, and the second antenna array is used as an MT antenna.

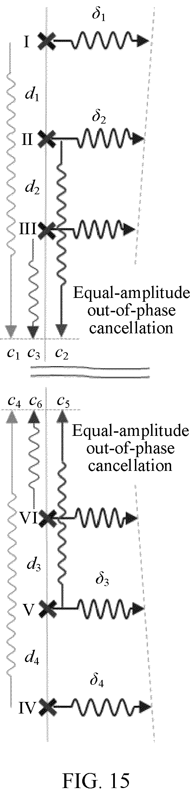

With reference to FIG. 15, six rows of antenna elements from top to bottom in FIG. 14 are sequentially denoted as an antenna element row I, an antenna element row II, an antenna element row III, an antenna element row IV, an antenna element row V, and an antenna element row VI in FIG. 15. An interference signal generated by the antenna element row I is denoted as c1, an interference signal generated by the antenna element row II is denoted as c2, an interference signal generated by the antenna element row III is denoted as c3, an interference signal generated by the antenna element row IV is denoted as c6, an interference signal generated by the antenna element row V is denoted as c5, and an interference signal generated by the antenna element row VI is denoted as c4.

A feed signal of the antenna element row III is used as a reference, and a phase lead of a feed signal of the antenna element row I and a phase lead of a feed signal of the antenna element row II are respectively $\delta_1$ and $\delta_2$ (where $\delta_1 > \delta_2 > 0$). A feed signal of the antenna element row IV is used as a reference, and a phase lead of a feed signal of the antenna element row V and a phase lead of a feed signal of the antenna element row VI are respectively $\delta_3$ and $\delta_4$ (where $\delta_4 > \delta_3 > 0$).

A reference plane is taken between the first antenna array and the second antenna array, and a phase difference $\varphi_1$ between the interference signal c1 and the interference signal c3 satisfies the following formula (7):

$$\varphi_1 = \frac{2\pi(d_1+d_2)}{\lambda} - \delta_1 \qquad (7)$$

A phase difference $\varphi_2$ between the interference signal c2 and the interference signal c3 satisfies the following formula (8):

$$\varphi_2 = \frac{2\pi d_2}{\lambda} - \delta_2 \qquad (8)$$

Based on the foregoing formula (7) and formula (8), if in-phase superimposition needs to be implemented on the interference signal c1 and the interference signal c3, and out-of-phase cancellation needs to be implemented on the interference signal c1 and the interference signal c2, it can be derived that $d_1$ satisfies $d_1 = (1 + \frac{\delta_1 - \delta_2}{\pi}) \times \frac{\lambda}{2}$, and $d_2$ satisfies $d_2 = (1 + \frac{\delta_2}{\pi}) \times \frac{\lambda}{2}$.

Based on a similar derivation manner, it can be obtained that $d_3$ satisfies $d_3 = (1 + \frac{\delta_3}{\pi}) \times \frac{\lambda}{2}$, and $d_4$ satisfies $d_4 = (1 + \frac{\delta_4 - \delta_3}{\pi}) \times \frac{\lambda}{2}$.

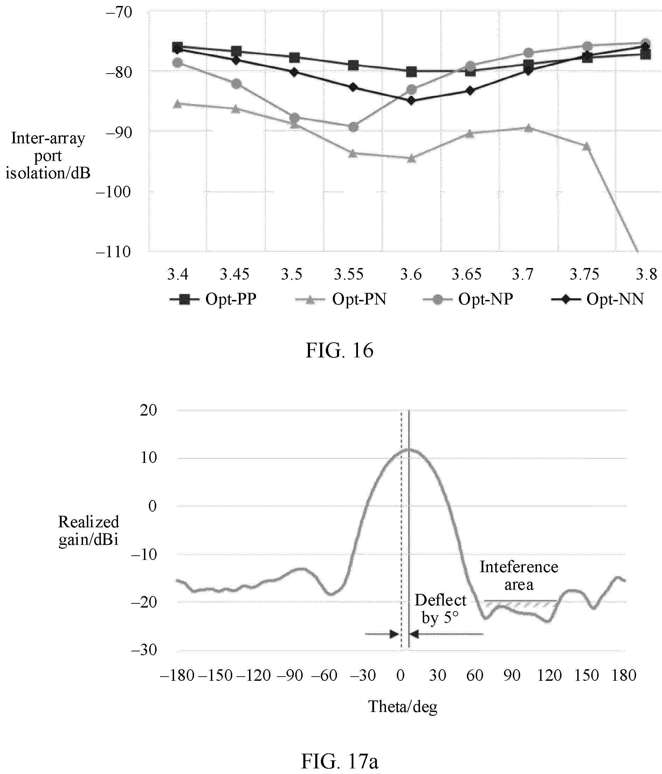

With reference to FIG. 16, it is not difficult to learn that good isolation can also be achieved between the MT antenna and the DU antenna in the antenna system shown in FIG. 14.

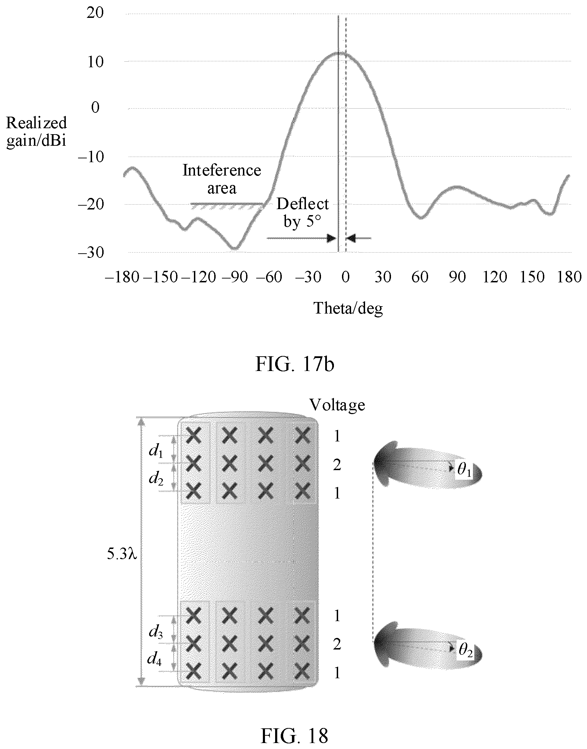

With reference to FIG. 17a, a vertical coordinate in FIG. 17a represents a gain corresponding to the first antenna array in FIG. 14, where 0 degrees corresponds to the direction perpendicular to the array plane, and +5 degrees is a maximum direction of the main beam generated by the first antenna array. An area approximately 90 degrees clockwise from the direction perpendicular to the array plane may be understood as an interference area that affects the second antenna array. Similarly, with reference to FIG. 17b, a vertical coordinate in FIG. 17b represents a gain corresponding to the second antenna array in FIG. 14, where 0 degrees indicates the direction perpendicular to the array plane, and -5 degrees is a maximum direction of the main beam generated by the second antenna array. An area approximately 90 degrees counterclockwise from the direction perpendicular to the array plane may be understood as an interference area that affects the first antenna array. In FIG. 17a and FIG. 17b, gains corresponding to interference areas are low. Therefore, good isolation can be achieved between the MT antenna and the DU antenna in the antenna system shown in FIG. 14.

With reference to FIG. 18, in another specific design, the first antenna array is disposed on the upper side, the second antenna array is disposed on the lower side, the first antenna array and the second antenna array each include three rows of antenna elements in the target direction, and a distance between an upper edge of the first antenna array and a lower edge of the second antenna array is 5.3 times the wavelength. Spacings between three rows of antenna elements of the first antenna array in the target direction are separately $d_1$ and $d_2$, and spacings between three rows of antenna elements of the second antenna array in the target direction are separately $d_3$ and $d_4$. In addition, the main beam generated by the first antenna array deflects toward the lower side by five degrees relative to the direction perpendicular to the array plane, and the main beam generated by the second antenna array deflects toward the lower side by five degrees relative to the direction perpendicular to the array plane. In an optional implementation, a ratio of excitation voltage amplitudes of the rows of antenna elements from top to bottom in the first antenna array may be set to 1:2:1, and a ratio of excitation voltage amplitudes of the rows of antenna elements from top to bottom in the second antenna array is also 1:2:1.

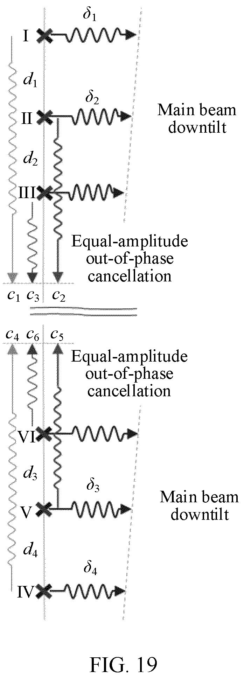

With reference to FIG. 19, six rows of antenna elements from top to bottom in FIG. 18 are sequentially denoted as an antenna element row I, an antenna element row II, an antenna element row III, an antenna element row IV, an antenna element row V, and an antenna element row VI in FIG. 19. An interference signal generated by the antenna element row I is denoted as c1, an interference signal generated by the antenna element row II is denoted as c2, an interference signal generated by the antenna element row III is denoted as c3, an interference signal generated by the antenna element row IV is denoted as c6, an interference signal generated by the antenna element row V is denoted as c5, and an interference signal generated by the antenna element row VI is denoted as c4.

A feed signal of the antenna element row III is used as a reference, and a phase lead of a feed signal of the antenna element row I and a phase lead of a feed signal of the antenna element row II are respectively $\delta_1$ and $\delta_2$ (where $\delta_1 > \delta_2 > 0$). A feed signal of the antenna element row IV is used as a reference, and a phase lag of a feed signal of the antenna element row V and a phase lag of a feed signal of the antenna element row VI are respectively $\delta_3$ and $\delta_4$ (where $\delta_4 > \delta_3 > 0$).

A reference plane is taken between the first antenna array and the second antenna array, and a phase difference $\varphi_1$ between the interference signal c1 and the interference signal c3 satisfies a formula (7):

$$\varphi_1 = \frac{2\pi(d_1+d_2)}{\lambda} - \delta_1 \qquad (7)$$

A phase difference $\varphi_2$ between the interference signal c2 and the interference signal c3 satisfies a formula (8):

$$\varphi_2 = \frac{2\pi d_2}{\lambda} - \delta_2 \qquad (8)$$

Based on the foregoing formula (7) and formula (8), if in-phase superimposition needs to be implemented on the interference signal c1 and the interference signal c3, and out-of-phase cancellation needs to be implemented on the interference signal c1 and the interference signal c2, it can be derived that $d_1$ satisfies $d_1 = (1 + \frac{\delta_1 - \delta_2}{\pi}) \times \frac{\lambda}{2}$, and $d_2$ satisfies $d_2 = (1 + \frac{\delta_2}{\pi}) \times \frac{\lambda}{2}$.

Based on a similar derivation manner, it can be obtained that $d_3$ satisfies $d_3 = (1 - \frac{\delta_3}{\pi}) \times \frac{\lambda}{2}$, and $d_4$ satisfies $d_4 = (1 - \frac{\delta_4 - \delta_3}{\pi}) \times \frac{\lambda}{2}$.

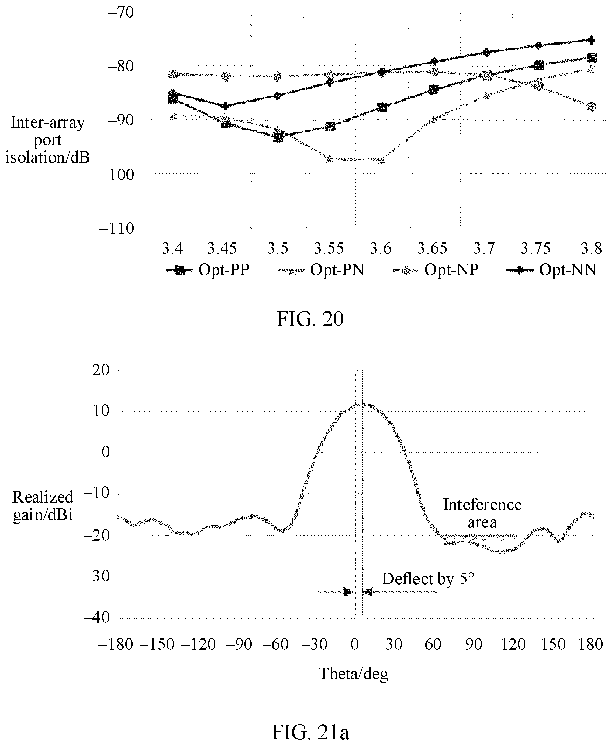

With reference to FIG. 20, it is not difficult to learn that good isolation can also be achieved between an MT antenna and a DU antenna in the antenna system shown in FIG. 18.

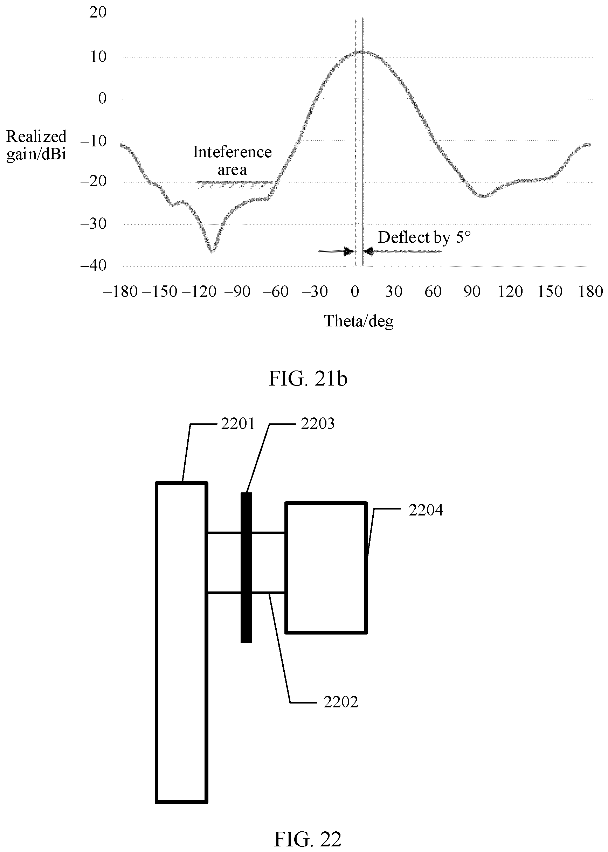

With reference to FIG. 21a, a vertical coordinate in FIG. 21a represents a gain corresponding to the first antenna array in FIG. 18, where 0 degrees corresponds to the direction perpendicular to the array plane, and +5 degrees is a maximum direction of the main beam generated by the first antenna array. An area approximately 90 degrees clockwise from the direction perpendicular to the array plane may be understood as an interference area that affects the second antenna array. Similarly, with reference to FIG. 21b, a vertical coordinate in FIG. 21b represents a gain corresponding to the second antenna array in FIG. 18, where 0 degrees indicates the direction perpendicular to the array plane, and +5 degrees is a maximum direction of the main beam generated by the second antenna array. An area approximately 90 degrees counterclockwise from the direction perpendicular to the array plane may be understood as an interference area that affects the first antenna array. In FIG. 21a and FIG. 21b, gains corresponding to interference areas are low. Therefore, good isolation can be achieved between the MT antenna and the DU antenna in the antenna system shown in FIG. 18.

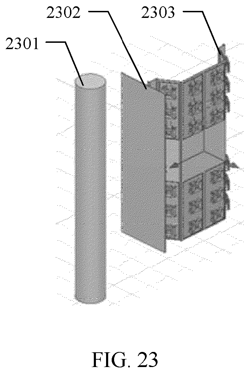

This application further provides an antenna pole station. With reference to FIG. 22, the antenna pole station includes a pole 2201, a mounting member 2202, a baffle plate 2203, and an antenna module 2204. The pole 2201 is fastened to the mounting member 2202, the mounting member 2202 is fastened to the baffle plate 2203 and the antenna module 2204, the baffle plate 2203 is disposed between the pole 2201 and the antenna module 2204, and the foregoing antenna system is disposed in the antenna module 2204. In an actual application scenario, the pole 2201 and the mounting member 2202 reflect electromagnetic waves, for example, reflect an electromagnetic wave generated by the MT antenna to the DU antenna. Consequently, the isolation is reduced. Through disposition of the baffle plate 2203, electromagnetic waves generated by the MT antenna and the DU antenna are scattered or adjusted, and a constructed reflection path ensures that a reflection range matches a null range. Therefore, the foregoing problem is resolved, and the isolation is improved. With reference to FIG. 23, for ease of understanding a relative position relationship between the pole 2201, the baffle plate 2203, and the antenna system, FIG. 23 shows a three-dimensional relationship between a pole 2301, a baffle plate 2302, and an antenna system 2303.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system and apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

**Claims**

1. An antenna system, comprising a first antenna array and a second antenna array, wherein the first antenna array is disposed on a first side, and the second antenna array is disposed on a second side; and
   a spacing between two adjacent rows of antenna elements of the first antenna array in a target direction is determined based on a wavelength and a feeding phase difference between the two adjacent rows of antenna elements of the first antenna array in the target direction, a spacing between two adjacent rows of antenna elements of the second antenna array in the target direction is determined based on the wavelength and a feeding phase difference between the two adjacent rows of antenna elements of the second antenna array in the target direction, the target direction points from the first side to the second side, and the wavelength is a wavelength corresponding to an operating frequency band of the first antenna array and the second antenna array.

2. The antenna system according to claim 1, wherein if a main beam generated by the first antenna array does not deflect relative to a direction perpendicular to an array plane, the spacing between the two adjacent rows of antenna elements of the first antenna array in the target direction is half the wavelength.

3. The antenna system according to claim 1, wherein if a main beam generated by the first antenna array deflects toward the first side relative to a direction perpendicular to an array plane, the spacing between the two adjacent rows of antenna elements of the first antenna array in the target direction is less than half the wavelength;
   or
   if a main beam generated by the first antenna array deflects toward the second side relative to a direction perpendicular to an array plane, the spacing between the two adjacent rows of antenna elements of the first antenna array in the target direction is greater than half the wavelength.

4. The antenna system according to claim 3, wherein if the main beam generated by the first antenna array deflects toward the first side relative to the direction perpendicular to the array plane, the spacing $d_a$

between the two adjacent rows of antenna elements of the first antenna array in the target direction satisfies $d_a = (1 - \frac{\delta_a}{\pi}) \times \frac{\lambda}{2}$, wherein $\delta_a$ is the feeding phase difference between the two adjacent rows of antenna elements of the first antenna array in the target direction, and $\lambda$ is the wavelength;

or

if the main beam generated by the first antenna array deflects toward the second side, $d_a$ satisfies

$$d_a = (1 + \frac{\delta_a}{\pi}) \times \frac{\lambda}{2}.$$

5. The antenna system according to any one of claims 1 to 4, wherein if a main beam generated by the second antenna array does not deflect relative to the direction perpendicular to the array plane, the spacing between the two adjacent rows of antenna elements of the second antenna array in the target direction is half the wavelength.

6. The antenna system according to any one of claims 1 to 4, wherein if a main beam generated by the second antenna array deflects toward the first side relative to the direction perpendicular to the array plane, the spacing between the two adjacent rows of antenna elements of the second antenna array in the target direction is greater than half the wavelength;

or

if a main beam generated by the second antenna array deflects toward the second side relative to the direction perpendicular to the array plane, the spacing between the two adjacent rows of antenna elements of the second antenna array in the target direction is less than half the wavelength.

7. The antenna system according to claim 6, wherein if the main beam generated by the second antenna array deflects toward the first side relative to the direction perpendicular to the array plane, the spacing $d_b$ between the two adjacent rows of antenna elements of the second antenna array in the target direction satisfies $d_b = (1 + \frac{\delta_b}{\pi}) \times \frac{\lambda}{2}$, wherein $\delta_b$ is the feeding phase difference between the two adjacent rows of antenna elements of the second antenna array in the target direction;

or

if the main beam generated by the second antenna array deflects toward the second side relative to the direction perpendicular to the array plane, the spacing $d_b$ between the two adjacent rows of antenna elements of the second antenna array in the target direction satisfies $d_b = (1 - \frac{\delta_b}{\pi}) \times \frac{\lambda}{2}.$

8. The antenna system according to any one of claims 1 to 7, wherein if the first antenna array comprises M rows of antenna elements in the target direction, excitation voltage amplitudes of the M rows of antenna elements satisfy a distribution of first increasing and then decreasing in the target direction; and if the second antenna array comprises N rows of antenna elements in the target direction, excitation voltage amplitudes of the N rows of antenna elements satisfy a distribution of first increasing and then decreasing in the target direction.

9. The antenna system according to claim 8, wherein a ratio of the excitation voltage amplitudes of the M rows of antenna elements in the first antenna array is

$$C_{M-1}^0 : C_{M-1}^1 : C_{M-1}^2 : \cdots : C_{M-1}^{M-2} : C_{M-1}^{M-1}$$ in the target direction, and a ratio of the excitation voltage amplitudes of the N rows of antenna elements in the second antenna array is

$$C_{N-1}^0 : C_{N-1}^1 : C_{N-1}^2 : \cdots : C_{N-1}^{N-2} : C_{N-1}^{N-1}$$ in the target direction.

10. The antenna system according to any one of claims 1 to 8, wherein if the first antenna array comprises the M rows of antenna elements in the target direction, a sum of excitation voltage amplitudes of odd-numbered rows of antenna elements among the M rows of antenna elements is equal to a sum of excitation voltage amplitudes of even-numbered rows of antenna elements among the M rows of antenna elements; and if the second antenna array comprises the N rows of antenna elements in the target direction, a sum of excitation voltage amplitudes of odd-numbered rows of antenna elements among the N rows of antenna elements is equal to a sum of excitation voltage amplitudes of even-numbered rows of antenna elements among the N rows of antenna elements.

11. The antenna system according to any one of claims 1 to 10, wherein the first side is an upper side, and the second side is a lower side; or the first side is a left side, and the second side is a right side.

12. The antenna system according to any one of claims 1 to 11, wherein at least one target antenna array is present in the first antenna array and the second antenna array, and the target antenna array comprises at least three rows of antenna elements in the target direction.

13. An antenna system, comprising a first antenna array and a second antenna array, wherein the first antenna array and the second antenna array are separately disposed on a first side and a second side; and

the first antenna array comprises one row of antenna elements in a target direction, a spacing between two adjacent rows of antenna elements of the second antenna array in the target direction is determined based on a wavelength and a feeding phase difference between the two adjacent rows of antenna elements of the second antenna array in the target direction, the target direction points from the first side to the second side, and the wavelength is a wavelength corresponding to an operating frequency band of the first antenna array and the second antenna array.

14. The antenna system according to claim 13, wherein if a main beam generated by the second antenna array does not deflect relative to a direction perpendicular to an array plane, the spacing between the two adjacent rows of antenna elements of the second antenna array in the target direction is half the wavelength.

15. The antenna system according to claim 13, wherein if the second antenna array is disposed on the first side, and a main beam generated by the second antenna array deflects toward the first side relative to a direction perpendicular to an array plane, the spacing between the two adjacent rows of antenna elements of the second antenna array in the target direction is less than half the wavelength;
or
if the second antenna array is disposed on the first side, and a main beam generated by the second antenna array deflects toward the second side relative to a direction perpendicular to an array plane, the spacing between the two adjacent rows of antenna elements of the second antenna array in the target direction is greater than half the wavelength.

16. The antenna system according to claim 13, wherein if the second antenna array is disposed on the second side, and a main beam generated by the second antenna array deflects toward the first side relative to a direction perpendicular to an array plane, the spacing between the two adjacent rows of antenna elements of the second antenna array in the target direction is greater than half the wavelength;
or
if the second antenna array is disposed on the second side, and a main beam generated by the second antenna array deflects toward the second side relative to a direction perpendicular to an array plane, the spacing between the two adjacent rows of antenna elements of the second antenna array in the target direction is less than half the wavelength.

17. The antenna system according to claim 15, wherein if the second antenna array is disposed on the first side, and the main beam generated by the second antenna array deflects toward the first side relative to the direction perpendicular to the array plane, the spacing $d_a$ between the two adjacent rows of antenna elements of the second antenna array in the target direction satisfies $d_a = (1 - \frac{\delta_a}{\pi}) \times \frac{\lambda}{2}$, wherein $\delta_a$ is the feeding phase difference between the two adjacent rows of antenna elements of the second antenna array in the target direction, and $\lambda$ is the wavelength;
or
if the second antenna array is disposed on the first side, and the main beam generated by the second antenna array deflects toward the second side, $d_a$ satisfies $d_a = (1 + \frac{\delta_a}{\pi}) \times \frac{\lambda}{2}$.

18. The antenna system according to claim 16, wherein if the second antenna array is disposed on the second side, and the main beam generated by the second antenna array deflects toward the first side relative to the direction perpendicular to the array plane, the spacing $d_b$ between the two adjacent rows of antenna elements of the second antenna array in the target direction satisfies $d_b = (1 + \frac{\delta_b}{\pi}) \times \frac{\lambda}{2}$, wherein $\delta_b$ is the feeding phase difference between the two adjacent rows of antenna elements of the second antenna array in the target direction;
or
if the second antenna array is disposed on the second side, and the main beam generated by the second antenna array deflects toward the second side relative to the direction perpendicular to the array plane, the spacing $d_b$ between the two adjacent rows of antenna elements of the second antenna array in the target direction satisfies $d_b = (1 - \frac{\delta_b}{\pi}) \times \frac{\lambda}{2}$.

19. The antenna system according to any one of claims 13 to 18, wherein if the second antenna array comprises M rows of antenna elements in the target direction, excitation voltage amplitudes of the M rows of antenna elements satisfy a distribution of first increasing and then decreasing in the target direction.

20. The antenna system according to claim 19, wherein a ratio of the excitation voltage amplitudes of the M rows of antenna elements of the second antenna array is sequentially $C_{M-1}^0 : C_{M-1}^1 : C_{M-1}^2 : \cdots : C_{M-1}^{M-2} : C_{M-1}^{M-1}$ in the target direction.

21. The antenna system according to any one of claims 13 to 19, wherein if the second antenna array comprises the M rows of antenna elements in the target direction, a sum of excitation voltage amplitudes of odd-numbered rows of antenna elements among the M rows of antenna elements is equal to a sum of excitation voltage amplitudes of even-numbered rows of antenna elements among the M rows of antenna elements.

22. The antenna system according to any one of claims 13 to 21, wherein the first side is an upper side, and the second side is a lower side; or
the first side is a left side, and the second side is a right side.

23. The antenna system according to any one of claims 13 to 22, wherein the second antenna array comprises at least three rows of antenna elements in the target direction.

24. An antenna pole station, comprising a pole, a mounting member, a baffle plate, and an antenna module, wherein the antenna system according to any one of claims 1 to 23 is disposed in the antenna module;

    the mounting member is fastened to the pole; and
    the baffle plate and the antenna module are fastened to the mounting member, and the baffle plate is disposed between the pole and the antenna module.

25. The antenna pole station according to claim 24, wherein the baffle plate is in a rectangular or curved shape.

IAB node

MT antenna

DU antenna

FIG. 1

Backhaul link

Access link

Macro base station

IAB node

UE

FIG. 2

IAB node 2

Child backhaul link

IAB node 1

Parent backhaul link

Macro base station

Core network

Access link

Access link

Access link

FIG. 3

Metal fences

MT antenna

DU antenna

Metal strip array

FIG. 4

Target
direction

Determined based on a wavelength
and a feeding phase difference
between two rows of antenna elements

First antenna
array

Determined based on the wavelength
and a feeding phase difference
between two rows of antenna elements

Second
antenna array

FIG. 5

FIG. 6

FIG. 7

FIG. 8

FIG. 9a

FIG. 9b

FIG. 9c

FIG. 10

FIG. 11

FIG. 12

FIG. 13a

FIG. 13b

FIG. 14

FIG. 15

FIG. 16

FIG. 17a

FIG. 17b

FIG. 18

FIG. 19

FIG. 20

FIG. 21a

FIG. 21b

FIG. 22

FIG. 23

A. CLASSIFICATION OF SUBJECT MATTER

H04L5/14(2006.01)i;H04B15/00(2006.01)i;H01Q1/52(2006.01)i

According to International Patent Classification (IPC) or to both national classification and IPC

**B. FIELDS SEARCHED**

Minimum documentation searched (classification system followed by classification symbols)

IPC: H04L H04B H01Q

Documentation searched other than minimum documentation to the extent that such documents are included in the fields searched

Electronic data base consulted during the international search (name of data base and, where practicable, search terms used)

CNTXT, ENTXT, ENTXTC, CNKI, 3GPP, IEEE: IAB, 接入, access, 回传, 回程, backhaul, 一体, 集成, integrate, 天线, antenna, 隔离, isolate, 干扰, interference, 抵消, 消除, 降低, 减少, 减小, diminish, reduce, cancel, suppress, 间距, 距离, distance, spacing, 全双工, Full Duplex, FD, 同时, 发送, 接收, simultaneous, RX, TX, 半, 二分之一, 0.5, half, 波长, wavelength, 相位差, phase difference

**C. DOCUMENTS CONSIDERED TO BE RELEVANT**

| Category* | Citation of document, with indication, where appropriate, of the relevant passages | Relevant to claim No. |
|---|---|---|
| Y | CN 105991170 A (CHINA ACADEMY OF TELECOMMUNICATIONS TECHNOLOGY) 05 October 2016 (2016-10-05) description, paragraphs 6-7 and 44 | 1, 11-13, 22-25 |
| Y | US 2003073465 A1 (LI SHIDONG) 17 April 2003 (2003-04-17) description, paragraph [0099] | 1, 11-13, 22-25 |
| Y | WO 0223670 A1 (NOKIA CORP.) 21 March 2002 (2002-03-21) description, paragraphs 18-30 | 1, 11-13, 22-25 |
| A | CN 105577226 A (XIDIAN UNIVERSITY) 11 May 2016 (2016-05-11) entire document | 1-25 |
| A | CN 113708849 A (BEIJING SAMSUNG TELECOM R&D CENTER et al.) 26 November 2021 (2021-11-26) entire document | 1-25 |
| A | CN 110098856 A (HUAWEI TECHNOLOGIES CO., LTD.) 06 August 2019 (2019-08-06) entire document | 1-25 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 March 2023** | **04 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

C. DOCUMENTS CONSIDERED TO BE RELEVANT

| Category* | Citation of document, with indication, where appropriate, of the relevant passages | Relevant to claim No. |
|---|---|---|
| A | BISHNU, A. et al. "Performance Evaluation of Full-Duplex IAB Multi-Cell and Multi-User Network for FR2 Band" <br> *IEEE Access,* Vol. 9, 14 May 2021 (2021-05-14), <br> ISSN: 2169-3536, <br> entire document | 1-25 |

| Patent document cited in search report | | | Publication date (day/month/year) | Patent family member(s) | | | Publication date (day/month/year) |
|---|---|---|---|---|---|---|---|
| CN | 105991170 | A | 05 October 2016 | None | | | |
| US | 2003073465 | A1 | 17 April 2003 | TWI | 241738 | B | 11 October 2005 |
| | | | | US | 6911954 | B2 | 28 June 2005 |
| | | | | WO | 03013156 | A2 | 13 February 2003 |
| | | | | WO | 03013156 | A3 | 16 October 2003 |
| WO | 0223670 | A1 | 21 March 2002 | US | 2003224828 | A1 | 04 December 2003 |
| | | | | US | 7123943 | B2 | 17 October 2006 |
| | | | | AU | 8776801 | A | 26 March 2002 |
| | | | | EP | 1338059 | A1 | 27 August 2003 |
| | | | | FI | 20002020 | A0 | 13 September 2000 |
| | | | | FI | 20002020 | A | 14 March 2002 |
| | | | | FI | 113590 | B | 14 May 2004 |
| | | | | CN | 1455972 | A | 12 November 2003 |
| CN | 105577226 | A | 11 May 2016 | None | | | |
| CN | 113708849 | A | 26 November 2021 | CN | 213342206 | U | 01 June 2021 |
| CN | 110098856 | A | 06 August 2019 | WO | 2019149137 | A1 | 08 August 2019 |
| | | | | WO | 2019149137 | A9 | 29 August 2019 |

Form PCT/ISA/210 (patent family annex) (July 2022)